# EUROPEAN PATENT APPLICATION

(11) **EP 4 550 490 A2**
(43) Date of publication of application: **07.05.2025**
(21) Application number: 24210355.4
(22) Date of filing: 01.11.2024
(51) Int. Cl.: H01M 8/2485, H01M 8/249, H01M 8/248, H01M 8/12

(54) **ELECTROCHEMICAL CELL COLUMNS INCLUDING TERMINATION MANIFOLDS**

(30) Priority: 02.11.2023 IN 202341074800
(71) Applicant: Bloom Energy Corporation, San Jose, CA 95134 (US)
(72) Inventor: BHANGU, Karanpal, San Jose, 95134 (US); RAMAN, Annamalai, San Jose, 95134 (US); BASU, Nilanjana, San Jose, 95134 (US); PETRUCHA, Michael, San Jose, 95134 (US)
(74) Representative: Wichmann, Hendrik

(57) **Abstract**

A cell column includes vertically aligned stacks containing electrochemical cells separated by interconnects, fuel manifolds disposed between the stacks, a termination manifold disposed above an uppermost one of the stacks, and an inlet conduit and an outlet conduit fluidly connected to the fuel manifolds and the termination manifold. The termination manifold is an electrical terminal of the cell column, and includes a fuel channel configured provide fuel to the uppermost one of the stacks.

## Description

### FIELD

Aspects of the present disclosure relate generally to electrochemical cell columns including cell stacks, such as fuel cell or electrolyzer cell stacks, and in particular, to cell columns including termination manifolds.

### BACKGROUND

A solid oxide fuel cell stack may include multiple fuel cells separated by metallic interconnects (IC) which provide both electrical connection between adjacent cells in the stack and channels for delivery and removal of fuel and oxidant. For solid oxide fuel cells (SOFC), the metallic interconnects are commonly composed of Cr-based alloys, such as CrFe alloys, which have a composition of 95wt% Cr - 5wt% Fe or Cr-Fe-Y having a 94wt% Cr - 5wt% Fe - 1wt% Y composition. The CrFe and CrFeY alloys retain their strength and are dimensionally stable at typical solid oxide fuel cell operating conditions, e.g., 700-900 °C in both air and wet fuel atmospheres.

### SUMMARY

A cell column includes vertically aligned stacks containing electrochemical cells separated by interconnects, fuel manifolds disposed between the stacks, a termination manifold disposed above an uppermost one of the stacks, and an inlet conduit and an outlet conduit fluidly connected to the fuel manifolds and the termination manifold. The termination manifold is an electrical terminal of the cell column, and includes a fuel channel configured provide fuel to the uppermost one of the stacks.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.
FIG. 1A is a perspective view of a SOFC stack, according to various embodiments of the present disclosure.
FIG. 1B is a cross-sectional view of a portion of the stack of FIG. 1A.
FIG. 2A is a top view of an air side of an interconnect, according to various embodiments of the present disclosure.
FIG. 2B is a top view of a fuel side of the interconnect of FIG. 2A.
FIG. 3A is a perspective view of an electrochemical cell column, according to various embodiments of the present disclosure.
FIGS. 3B is an exploded cross-sectional view of a portion of the electrochemical cell column of FIG. 3A.
FIG. 4A is a perspective view of a bottom side of a termination manifold 402 that may be included in the column 300 of FIG. 3A, according to various embodiments of the present disclosure.
FIG. 4B is a top view of the top side of the termination manifold of FIG. 4A.
FIG. 4C is a perspective view of a fuel channel of FIG. 4A.
FIG. 5A is a perspective view of a bottom side of a fuel manifold that may be included in the column of FIG. 3A, according to various embodiments of the present disclosure.
FIG. 5B is a top view of the top side of the fuel manifold of FIG. 5A.
FIG. 5C is a perspective view of a fuel channel of FIG. 5A.
FIG. 6 is a perspective view of a two column segment of an electrochemical cell system, according to various embodiments of the present disclosure.

### DETAILED DESCRIPTION

The present disclosure is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present. It will be understood that for the purposes of this disclosure, "at least one of X, Y, and Z" can be construed as X only, Y only, Z only, or any combination of two or more items X, Y, and Z (e.g., XYZ, XYY, YZ, ZZ).

Electrochemical cell systems include fuel cell and electrolyzer cell systems. In a high temperature fuel cell system, such as a solid oxide fuel cell (SOFC) system, an oxidizing flow is passed through the cathode side of the fuel cell while a fuel flow is passed through the anode side of the fuel cell. The oxidizing flow is typically air, while the fuel flow can be a hydrogen (H₂), ammonia or a hydrocarbon fuel, such as methane, natural gas, ethanol, or methanol. The fuel cell, operating at a temperature between 750°C and 950°C, enables the transport of negatively charged oxygen ions from the cathode flow stream to the anode flow stream, where the ion combines with either free hydrogen or hydrogen in a hydrocarbon molecule to form water vapor and/or with carbon monoxide to form carbon dioxide. The excess electrons from the negatively charged ions are routed back to the cathode side of the fuel cell through an electrical circuit completed between anode and cathode, resulting in an electrical current flow through the circuit.

In an electrolyzer system, such as a solid oxide electrolyzer system (SOEC), water (e.g., steam) is separated into hydrogen and oxygen by applying a voltage across the electrolyzer cells. In the SOEC stack, the anode is the air electrode and the cathode is the fuel electrode. Thus, the electrode to which the fuel (e.g., hydrogen or hydrocarbon fuel in a SOFC, and water in a SOEC) is supplied may be referred to as the fuel electrode and the opposing electrode may be referred to as the air electrode in both SOFC and SOEC cells.

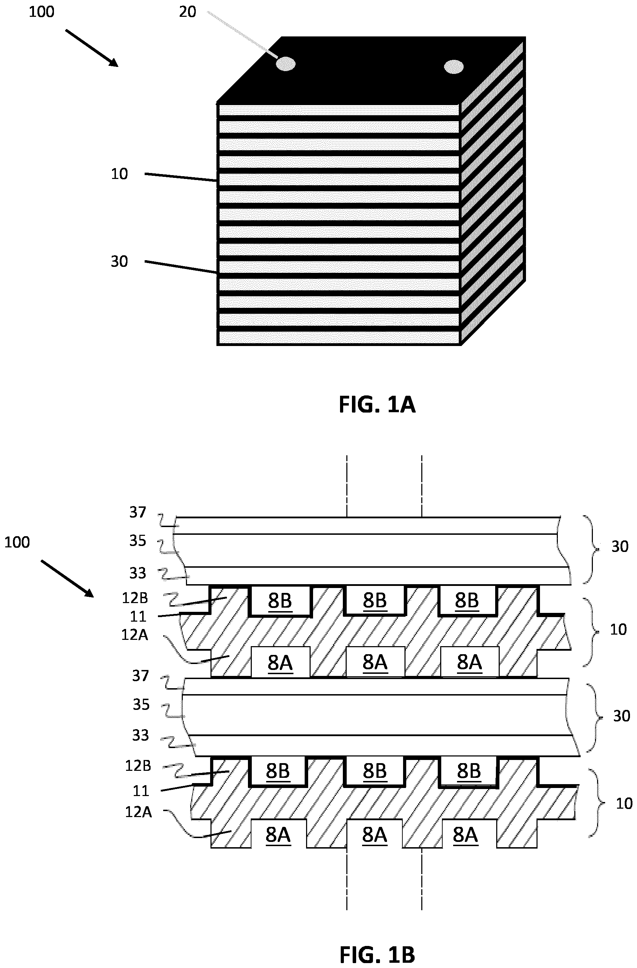

FIG. 1A is a perspective view of an electrochemical cell stack 100 and FIG. 1B is a sectional view of a portion of the stack 100, according to various embodiments of the present disclosure. In the embodiments below, the stack 100 is described as being operated as a solid oxide fuel cell (SOFC) stack 100. However, it should be noted that the stack 100 may also be operated as an electrolyzer (e.g., a solid oxide electrolyzer cell (SOEC) stack). Referring to FIGS. 1A and 1B, the stack 100 includes electrochemical cells 30 separated by interconnects 10. Referring to FIG. 1B, each electrochemical cell 30 comprises a cathode electrode 33, a solid oxide electrolyte 35, and an anode electrode 37.

Various materials may be used for the cathode electrode 33, electrolyte 35, and anode electrode 37. For example, the anode electrode 37 may comprise a cermet comprising a nickel containing phase and a ceramic phase. The nickel containing phase may consist entirely of nickel in a reduced state. This phase may form nickel oxide when it is in an oxidized state. Thus, the anode electrode 37 is preferably annealed in a reducing atmosphere prior to operation to reduce the nickel oxide to nickel. The nickel containing phase may include other metals in addition to nickel and/or nickel alloys. The ceramic phase may comprise a stabilized zirconia, such as yttria and/or scandia stabilized zirconia and/or a doped ceria, such as gadolinia, yttria and/or samaria doped ceria.

The electrolyte 35 may comprise a stabilized zirconia, such as scandia stabilized zirconia (SSZ) or yttria stabilized zirconia (YSZ). Alternatively, the electrolyte 35 may comprise another ionically conductive material, such as a doped ceria.

The cathode electrode 33 may comprise an electrically conductive material, such as an electrically conductive perovskite material, such as lanthanum strontium manganite (LSM). Other conductive perovskites, such as LSCo, etc., or metals, such as Pt, may also be used. The cathode electrode 33 may also contain a ceramic phase similar to the anode electrode 37. The electrodes and the electrolyte may each comprise one or more sublayers of one or more of the above described materials.

Electrochemical cell stacks 100 are frequently built from a multiplicity of SOFCs 30 in the form of planar elements, tubes, or other geometries. Although the electrochemical cell stack 100 in FIG. 1A is vertically oriented, electrochemical cell stacks may be oriented horizontally or in any other direction. Fuel and air may be provided to the electrochemically active surface, which can be large. For example, fuel may be provided through fuel holes 20 formed in each interconnect 10. The fuel holes 20 may be aligned to form fuel conduits (i.e., fuel riser openings) that extend through the stack 100.

Each interconnect 10 electrically connects adjacent electrochemical cells 30 in the stack 100. In particular, an interconnect 10 may electrically connect the anode electrode 37 of one electrochemical cell 30 to the cathode electrode 33 of an adjacent electrochemical cell 30. FIG. 1B shows that the lower electrochemical cell 30 is located between two interconnects 10. An optional Ni mesh may be used to electrically connect the interconnect 10 to the anode electrode 37 of an adjacent electrochemical cell 30.

Each interconnect 10 includes fuel ribs 12A that at least partially define fuel channels 8A and air ribs 12B that at least partially define oxidant (e.g., air) channels 8B. The interconnect 10 may operate as a gas-fuel separator that separates a fuel, such as a hydrocarbon fuel, flowing to the fuel electrode (i.e., anode 37) of one cell in the stack from oxidant, such as air, flowing to the air electrode (i.e., cathode 33) of an adjacent cell in the stack.

Each interconnect 10 may be made of or may contain electrically conductive material, such as a metal alloy (e.g., chromium-iron alloy) which has a similar coefficient of thermal expansion to that of the solid oxide electrolyte in the cells (e.g., a difference of 0-10%). For example, the interconnects 10 may comprise a metal (e.g., a chromium-iron alloy, such as 4-6 weight percent iron, optionally 1 or less weight percent yttrium and balance chromium alloy). Alternatively, any other suitable conductive interconnect material, such as stainless steel (e.g., ferritic stainless steel, SS446, SS430, etc.) or iron-chromium alloy (e.g., Crofer^{tm} 22 APU alloy which contains 20 to 24 wt.% Cr, less than 1 wt.% Mn, Ti and La, and balance Fe, or ZMG^{tm} 232L alloy which contains 21 to 23 wt.% Cr, 1 wt.% Mn and less than 1 wt.% Si, C, Ni, Al, Zr and La, and balance Fe). A protective layer 11, which may be formed of an electrically conductive material, such as lanthanum strontium manganite (LSM) and/or a spinel manganese cobalt oxide (MCO), may be provided on an air side of each interconnect 10.

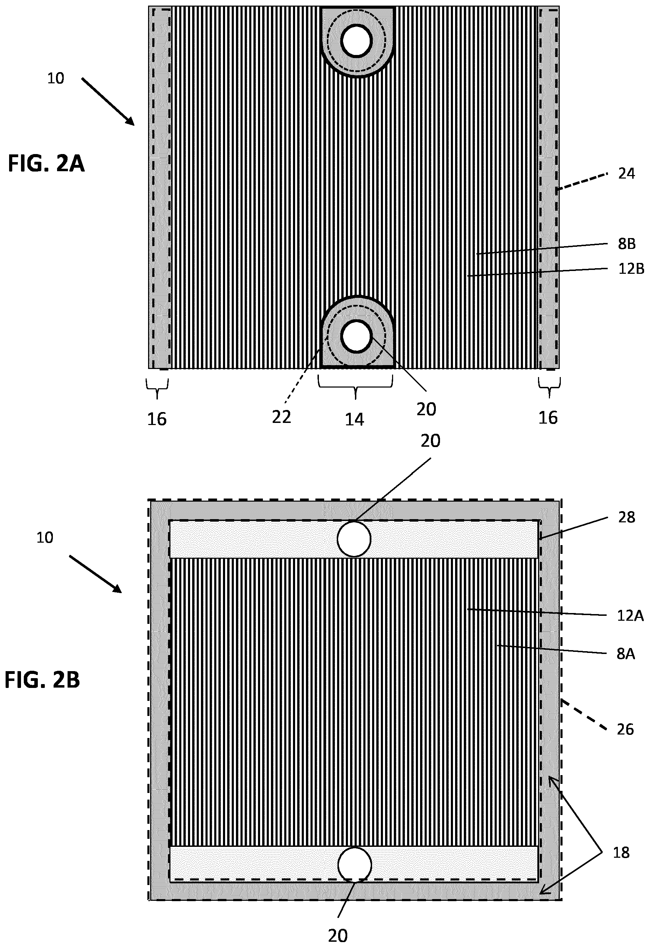

FIG. 2A is a top view of the air side of the interconnect 10, and FIG. 2B is a top view of a fuel side of the interconnect 10, according to various embodiments of the present disclosure. Referring to FIGS. 1B and 2A, the air side includes the air channels 8B. Air flows through the air channels 8B to a cathode electrode 33 of an adjacent electrochemical cell 30. The interconnect 10 may include ring seal regions 14 and strip seal regions 16. The seal regions 14, 16 may be flat surfaces that are coplanar with the tops of the air ribs 12B. Fuel holes 20 may be formed in the ring seal regions 14 and may extend through the interconnect 10. Ring seals 22 may be disposed on the ring seal regions 14 surrounding the fuel holes 20, to prevent fuel from contacting an adjacent cathode electrode 33. Strip seals 24 may be disposed on the strip seal regions 16. The seals 22, 24 may be formed of a glass or glass-ceramic material. The strip seal regions 16 may be an elevated plateaus which do not include ribs or channels.

Referring to FIGS. 1B and 2B, the fuel side of the interconnect 10 may include the fuel channels 8A and fuel manifolds 28, which are surrounded by a frame seal region 18. The frame seal region 18 may be a flat region that is coplanar with the tops of the fuel ribs 12A. Fuel flows from one of the fuel holes 20 (e.g., inlet hole that forms part of the fuel inlet riser), into the adjacent manifold 28, through the fuel channels 8A, and to an anode 37 of an adjacent electrochemical cell 30. Excess fuel may flow into the other fuel manifold 28 and then into the other (e.g., outlet) fuel hole 20. A frame seal 26 may be disposed on the frame seal region 18. The frame seal 26 may be formed of a glass or glass-ceramic material.

Fuel is delivered through one of the fuel holes 20 to a corresponding manifold 28 that distributes the fuel to each fuel channel 8A. Fuel flows down each fuel channel 8A. Any unreacted fuel is collected in the other manifold 28 and exits the stack via the other fuel hole 20. This flow channel geometry may be optimized for operation on natural gas with partial external pre-reforming.

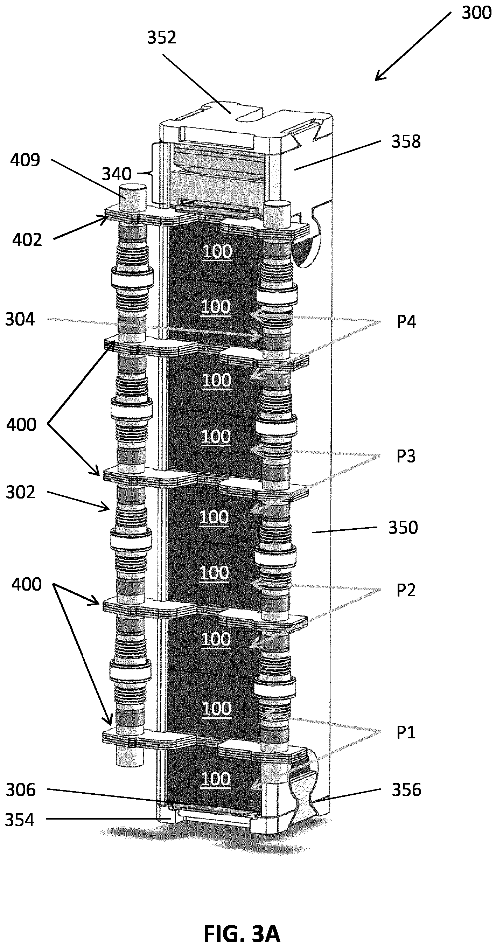

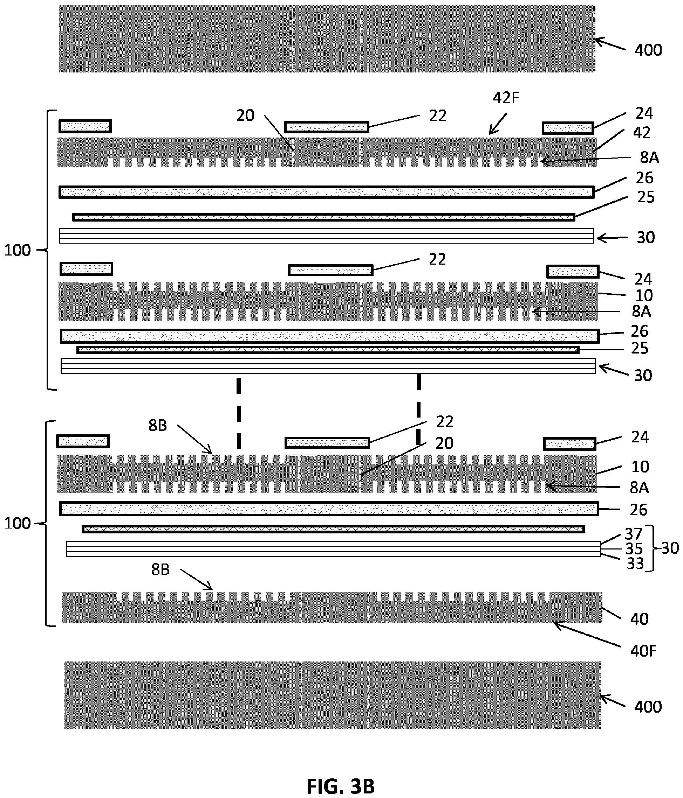

FIG. 3A is a perspective view of an electrochemical cell column 300, according to various embodiments of the present disclosure, and FIG. 3B is an exploded cross-sectional view of a electrochemical cell stack and a fuel manifolds of the electrochemical cell column 300.

Referring to FIGS. 3A, and 3B, the electrochemical cell column 300 may include multiple electrochemical cell stacks 100, an inlet conduit 302, an outlet conduit 304, a bottom termination plate 306, fuel manifolds 400 (e.g., anode splitter plates), and a termination manifold 402. The electrochemical cell column 300 may also include a compression assembly 340, and a ceramic frame comprising side baffles 350, a top plate 352, a bottom plate 354, bottom connectors 356, and top connectors 358. The bottom connectors 356 and the top connectors 358 connect the side baffles 350 to the bottom plate 354 and the top plate 352, respectively.

Each stack 100 may include any suitable number of electrochemical cells 30, such as from 10 to 40 cells 30, such as from 20 to 35 cells 30, or about 30 cells, and a corresponding number of interconnects 10 disposed therebetween. The stacks 100 may also include conductive layers 25, such as a nickel mesh, disposed between the fuel side of each interconnect 10 and the anode (e.g., fuel electrode) 37 of an adjacent electrochemical cell 30, to electrically connect the electrochemical cells 30 and interconnects 10 of the stack 100.

The stacks 100 may also include an air end plate 40 disposed at an air side (e.g., adjacent the cathode electrode 33) of an outermost cell of the stack 100, and/or a fuel end plate 42 disposed at a fuel side end (e.g., adjacent the anode electrode 37) of an outermost cell of the stack 100. In particular, the end plates 40, 42 may be used to electrically connect the stacks 100 to corresponding fuel manifolds 400 or termination manifold 402.

In various embodiments, the air end plates 40 may have a flat surface 40F opposing the air channels 8B, as shown in FIG. 3B. The flat surface 40F lacks fuel channels 8A. The flat surface 40F may be placed against a corresponding fuel manifold 400, or in the case of the lowermost stack 100, against the bottom termination plate 306, which may be electrically connected to the stacks 100. The bottom termination plate 306 may operate to seal the fuel holes 20 of the air and/or fuel end plates 40, 42 disposed thereon. The fuel end plates 42 may have a flat surface 42F opposing the fuel channels 8A. The flat surface 42F lacks air channels 8B. The flat surface 42F may be placed against a corresponding fuel manifold 400 or termination manifold 402 (as illustrated in FIG. 3A).

The inlet conduit 302 is fluidly connected to fuel manifolds 400 and the termination manifold 402 and is configured to provide a fuel stream (i.e., fuel inlet stream) to each fuel manifold 400 and the termination manifold 402. The outlet conduit 304 is fluidly connected to the fuel manifolds 400 and the termination manifold 402 and is configured to collect anode exhaust (i.e., the fuel outlet stream) received from the fuel manifolds 400 and termination manifold 402. The fuel manifolds 400 and the termination manifold 402 may be configured to provide a fuel to the stacks 100 and to receive anode fuel exhaust from the stacks 100. For example, the fuel manifolds 400 and the termination manifold 402 may be fluidly connected to internal fuel riser channels formed by aligning the fuel holes 20 of the interconnects 10, as discussed above.

The compression assembly 340 may be disposed between the top plate 352 and the termination manifold 402 and may be configured to apply pressure and compress the stacks 100, so as to seal the stacks 100 to adjacent components (e.g., fuel manifolds 400, the termination manifold 402 and the bottom termination plate 306).

With regard to the ceramic frame, the bottom connectors 356 may be configured to connect the bottom plate 354 to the side baffles 350, such that portions of the side baffles 350 directly contact the bottom plate 354. The top connectors 358 may be configured to connect the top plate 352 to the side baffles 350. In various embodiments, the top connectors 358 may be longer and/or wider than the bottom connectors 356. In particular, the top connectors 358 may separate the top plate 352 and the side baffles 350, such that top plate 352 does not directly contact the side baffles 350. As such, the top connectors 358 may be configured to increase the height (e.g., length) of the column 300. Therefore, the top connectors 358 may provide additional space inside of the ceramic frame, such that the uppermost stack 100 may be added to the column 300, without increasing the length of the side baffles 350. In other words, the top connectors 358 may allow for the use of side baffles 350 that are designed for use in smaller columns.

In various embodiments, each fuel manifold 400 may directly contact a corresponding pair P1, P2, P3, P4 of the stacks 100. The two respective stacks 100 of each pair P1, P2, P3, P4 of stacks 100 are disposed above and below the respective fuel manifold 400, respectively. For example, for the lowermost fuel manifold 400, the first pair P1 of the stacks 100 includes the lowermost stack 100 located directly below the lowermost fuel manifold 400 and a second from the bottom stack located directly above the lowermost fuel manifold 400. Each fuel manifold 400 may provide fuel to and receive anode exhaust from the corresponding pair P1, P2, P3, P4 of the stacks 100. For example, the lowermost fuel manifold 400 may be fluidly connected to the first pair P1 of stacks 100, and the uppermost fuel manifold 400 may be fluidly connected to fourth pair P4 of stacks 100.

The termination manifold 402 may be disposed on top of the uppermost stack 100 and may be fluidly connected thereto. As such, the termination manifold 402 may provide fuel to and optionally receive anode exhaust from the uppermost stack 100. Accordingly, two of the stacks 100 may be disposed between each pair of adjacent fuel manifolds 400. Two of the uppermost stacks 100 are located between the uppermost fuel manifold 400 and the termination manifold 402. One stack 100 may be disposed below the lowermost fuel manifold 400. As such, the column 300 may include nine stacks 100 instead of eight due to the addition of the termination manifold 402. The addition of the ninth stack 100 increases the power output of a fuel cell column 300. Furthermore, addition of the termination manifold 402 at the top of the fuel cell column 300 improves the fuel distribution and temperature uniformity along the height of the column.

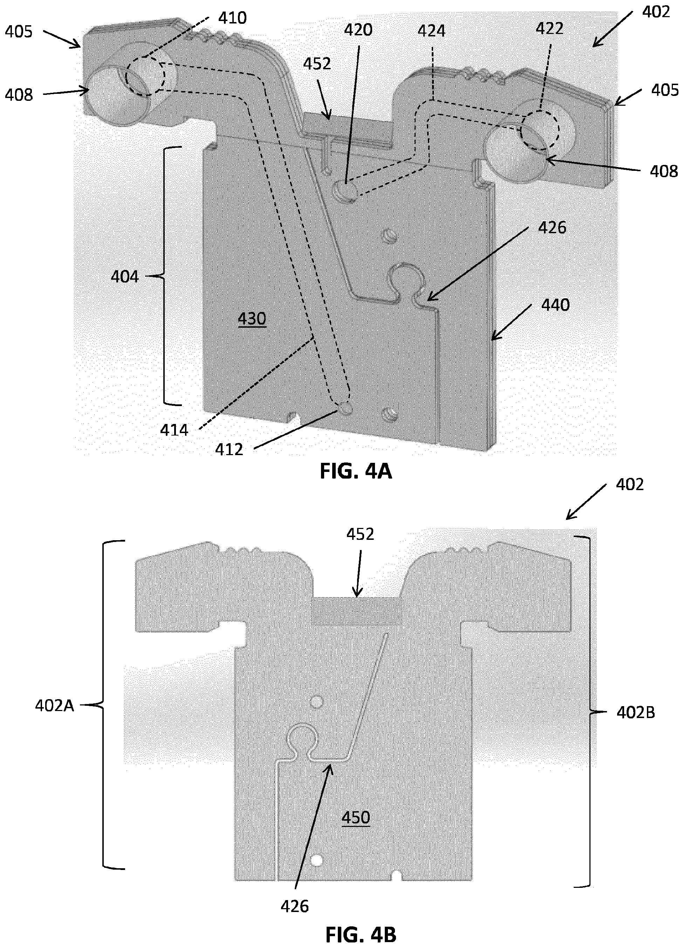

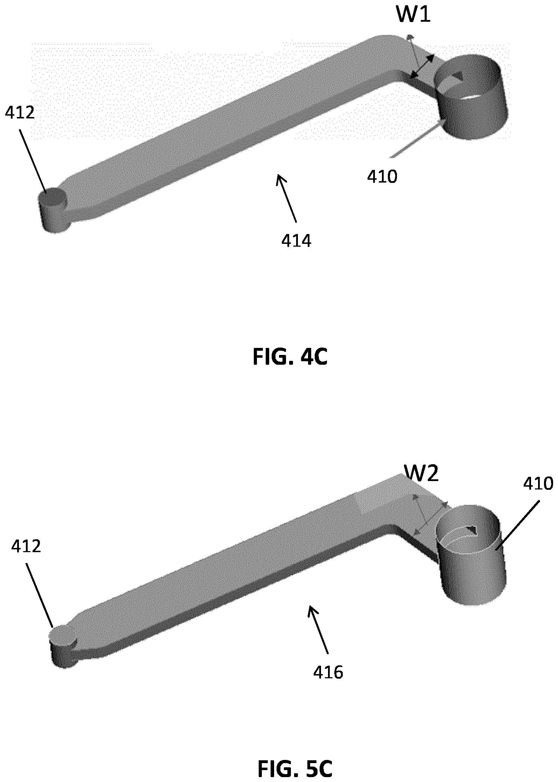

FIG. 4A is a perspective view of a bottom side of a termination manifold 402 that may be included in the column 300 of FIG. 3A, according to various embodiments of the present disclosure. FIG. 4B is a top view of the top side of the termination manifold 402 of FIG. 4A. FIG. 4C is a perspective view of a fuel channel 414 of FIG. 4A.

Referring to FIGS. 3A, 4A, and 4B, the termination manifold 402 includes a body 404 and arms 405 that extend horizontally from the body 404. The body 404 may vertically overlap with the stacks 100 and may directly contact the top of the uppermost stack 100. Tubes 408 that extend in a vertical direction may be attached to the arms 405. The tubes 408 are connected to a respective one of the inlet conduit 302 or the outlet conduit 304. Thus, the arms 405 may be fluidly connected to the inlet and outlet conduits 302, 304 by the tubes 408. In some embodiments, the tubes 408 may be welded or brazed to the arms 405.

The termination manifold 402 may also include a fuel inlet hole 410, a fuel outlet hole 412, and a fuel channel 414 fluidly connecting the fuel inlet and outlet holes 410, 412. In addition, the termination manifold 402 may include anode exhaust inlet hole 420, an anode exhaust outlet hole 422, and an anode exhaust channel 424 fluidly connecting the anode exhaust inlet and outlet holes 420, 422. The fuel inlet hole 412 and anode exhaust outlet hole 420 may be vertically aligned with the fuel holes 20 of the stack 100, in order to form the fuel riser channels that circulate the fuel and anode exhaust within the column 300.

As shown in FIG. 4C, the fuel channel 414 may have a first width W1 ranging from about 10 mm to about 20 mm. The fuel channel 414 may be tapered adjacent to the fuel outlet hole 412, such that the width of the fuel channel 414 may be reduced to match the diameter of the fuel outlet hole 412.

In some embodiments, the termination manifold 402 may be formed by bonding one or more metal and/or ceramic plates. In one embodiment, the termination manifold 402 may include a lower plate 430, a channel plate 440, and an upper plate 450 (i.e., three plates total). In another embodiment, the termination manifold 402 may include two channel plates 440 located between the lower plate 430 and the upper plate 450 (i.e., four plates total). The plates may be brazed or welded together. The channels 414, 424 may extend through the channel plate 440, between the lower plate 430 and the upper plate 450. The fuel holes 410, 412 and the anode exhaust holes 420, 422 may be formed by aligning though-holes that extend through the lower plate 430 and the channel plate 440. In some embodiments, the upper plate 450 may seal upper ends of the fuel holes 410, 412 and/or the anode exhaust holes 420, 422. This upper plate 450 configuration may allow for the omission of an upper terminal plate conventionally used to seal the internally manifolded fuel and exhaust holes 20 of stack 100 and serve as an electrical terminal for the column 300. Thus, current may be directly extracted from the termination manifold 402.

In an alternative embodiment, the fuel inlet hole 410 and the anode exhaust outlet hole 422 may be through-holes that extend through the plates 430, 440, 450. In this alternative embodiment shown in FIG. 3A, the column 300 may include optional conduit caps 409 that are attached to the termination manifold 402 and configured to seal upper ends of the fuel inlet hole 410 and the anode exhaust outlet hole 422.

In various embodiments, termination manifold 402 may include a relief cut 426, such as a groove or trench, which may be configured to relieve stress generated by thermal expansion and/or contraction of the termination manifold 402. In some embodiments the relief cut 426 may divide the termination manifold 402 into interlocking pieces 402A, 402B. In other embodiments, the relief cut 426 may not completely separate the termination manifold 402, such that electrical contact is maintained between the pieces 402A, 402B of the termination manifold 402.

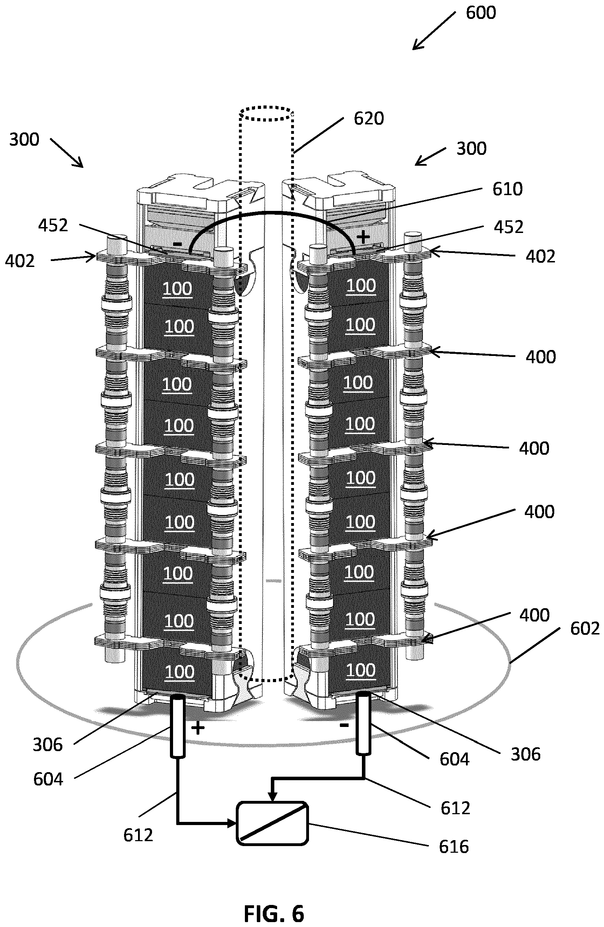

In various embodiments, termination manifold 402 may include an electrical contact 452 configured to provide a contact surface for the connection of a stack jumper or wire to the termination manifold 402, as discussed below with respect to FIG. 6. In embodiments where the relief cut 426 divides the termination manifold 402 into separate pieces, the electrical contact 452 may electrically and/or physically connect opposing sides or pieces of the termination manifold 402. For example, the electrical contact 452 may be configured to reduce electrical resistance caused by the relief cut 426. The electrical contact 452 may allow current to be extracted from the entirety of the termination manifold 402 if the column 300 is a fuel cell column, and/or may allow current to be provided to the entirety of the termination manifold 402 if the column 300 is an electrolyzer column or a reversible fuel cell column. The electrical contact 452 may be welded or brazed to the upper plate 450 or may comprise an integral portion of the upper plate 450 that laterally extends past the perimeters of the lower and channel plates 430, 440.

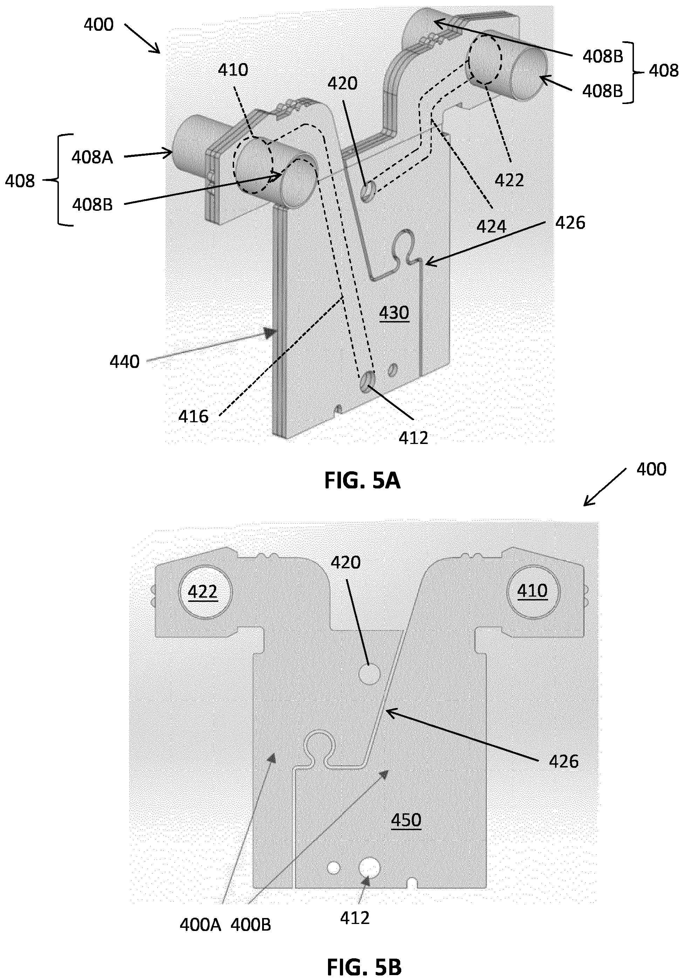

FIG. 5A is a perspective view of a bottom side of a fuel manifold 400 that may be included in the column 300 of FIG. 3A, according to various embodiments of the present disclosure. FIG. 5B is a top view of the top side of the fuel manifold 400 of FIG. 5A. FIG. 5C is a perspective view of a fuel channel 416 of FIG. 5A. The fuel manifold 400 may be similar to the termination manifold 402 of FIGS. 4A and 4B. Accordingly, only the differences therebetween will be discussed in detail.

Referring to FIGS. 5A, 5B, and 5C, the fuel holes 410, 412 and the anode exhaust holes 420, 422 may be through holes that extend through the plates 430, 440, 450 of the fuel manifold 400. In one embodiment, the fuel manifolds may include two channel plates 440 located between the lower plate 430 and the upper plate 450 (i.e., four plates total)

Fuel tubes 408 may be attached to the fuel inlet hole 410 and the anode exhaust outlet hole 422. In some embodiments, the tubes 408 may include upper tubes 408A and lower tubes 408B that may be brazed or welded to opposing sides the fuel inlet hole 410 and the anode exhaust outlet hole 422 to form the fuel tubes 408.

The relief cut 426 may divide the fuel manifold 400 into interlocking pieces or sections 400A, 400B. The fuel manifold 400 may include a fuel channel 416 connecting the fuel inlet hole 410 and fuel outlet hole 412. The fuel channel 416 may be tapered adjacent to the fuel outlet hole 412, such that the width of the fuel channel 416 may be reduced to match the diameter of the fuel outlet hole 412.

The fuel channel 416 may have a second width W2 ranging from about 15 mm to about 25 mm. The second width W2 of the fuel channel 416 of the fuel manifold 400 may be wider than the first width W1 of the fuel channel 414 of the termination manifold 402 by at least 10%, such as by 20 to 60%, for example by 40 to 50%. In an alternative embodiment, the fuel channels 416 of the two lower fuel manifolds 400 may have the first width W1, and the fuel channels of the two upper fuel manifolds 400 may have the second width W2, which is wider than the first width W1. The present inventors realized that including wider fuel channels in the two upper fuel manifolds 400 and narrower fuel channels in the two lower fuel manifolds 400 and in the uppermost termination manifold 402 improves the uniformity of fuel utilization among the stacks along the height of the column 300 compared to making all fuel channels 414, 416 with the same width. Furthermore, a column 300 which includes a three plate termination manifold 402 and four plate fuel manifolds 400 also improves the uniformity of fuel utilization among the stacks along the height of the column 300.

FIG. 6 is a perspective view of a two column 300 segment of an electrochemical cell system 600, according to various embodiments of the present disclosure. Referring to FIG. 6, the system 600 may include at least two fuel cell columns 300 disposed on a system base 602 and arranged around a central column 620. The columns 300 may be the same described above with respect to FIGS. 3A-5B. While a segment of two cell columns 300 is shown in FIG. 6, the system 600 may include additional columns 300, such as from 6 to 12 columns 300 to provide three to six segments.

The central column 620 may include various fuel processing components, such as an anode recuperator heat exchanger, an anode exhaust cooler heat exchanger, an anode tail gas oxidizer (ATO), optional fuel reformation catalyst, as described, for example, in U.S. Patent Number 9,287,572 B2 issued on March 15, 2016, and incorporated by reference herein in its entirety. The stacks 100 may be oriented in each segment such that the terminal manifold 402 of one column 300 serves as a negative terminal and the terminal manifold 402 of the other column 300 serves as a positive terminal. The corresponding bottom termination plates 306 of the columns 300 may operate as corresponding negative and positive terminals of the columns 300 and may be connected to current collector rods 604. In other words, the stacks 100 of one column 300 may be inverted with respect to the stack of the other column 300.

The termination manifolds 402 of the pair of columns 300 in each segment may be electrically connected to each other by a jumper 610 or wire attached to the electrical contacts 452 thereof. The current collecting rods 604 may be electrically connected to an external component, such as a power inverter 616, a resistive balance of plant load, or the like by jumpers or wires 612, to extract power from the columns 300 if the columns comprise fuel cell columns, or to provide power to the columns 300 if the columns comprise electrolyzer columns. In some embodiments, multiple two column 300 segments may be connected to the same external component in parallel or in series.

According to various embodiments, the termination manifolds provide various unexpected benefits, as compared to conventional stack configurations that utilize only internal fuel manifolds which are located between two stacks in each column. For example, the termination manifolds allow for columns to include an additional cell stack 100, such that a column may include 9 cell stacks rather than 8. The additional cell stack 100 increases the voltage output of a fuel cell column, and thereby increases the power output of a fuel cell system, and/or may increase space utilization efficiency. In addition, the termination manifolds may operate as a column terminal, thereby allowing for the omission of a conventional termination plate, which may reduce stack manufacturing cost and/or complexity. Termination manifolds may be configured with a lower number of plates and/or narrower fuel channels than at least some of the fuel manifold to provide fuel flow rates that increase fuel utilization uniformity along the height of a fuel cell column 300.

Fuel cell systems of the embodiments of the present disclosure are designed to reduce greenhouse gas emissions and have a positive impact on the climate.

Any one or more features from any one or more embodiments may be used in any suitable combination with any one or more features from one or more of the other embodiments. Although the foregoing refers to particular preferred embodiments, it will be understood that the invention is not so limited. It will occur to those of ordinary skill in the art that various modifications may be made to the disclosed embodiments and that such modifications are intended to be within the scope of the invention. All of the publications, patent applications and patents cited herein are incorporated herein by reference in their entirety.

**The invention also refers to the following embodiments, wherein the term "claim" means "embodiment":**
1. A cell column, comprising:
   vertically aligned stacks comprising electrochemical cells separated by interconnects;
   fuel manifolds disposed between the stacks;
   a termination manifold disposed above an uppermost one of the stacks, wherein the termination manifold comprises an electrical terminal of the cell column, and a fuel channel configured provide fuel to the uppermost one of the stacks; and
   an inlet conduit and an outlet conduit fluidly connected to the fuel manifolds and the termination manifold.
2. The cell column of claim 1, wherein the wherein the termination manifold comprises:
   a lower plate;
   a channel plate disposed on the bottom plate;
   a fuel outlet hole that extends through the bottom plate and the channel plate and is configured to provide the fuel to the uppermost one of the stacks;
   an anode exhaust inlet hole that extends through the bottom plate and the channel plate and is configured to receive the anode exhaust from the uppermost one of the stacks; and
   an upper plate disposed over the channel plate and seals upper ends of the fuel inlet hole and the anode exhaust inlet hole.
3. The cell column of claim 2, wherein the upper plate comprises an electrical contact that extends horizontally beyond perimeters of the lower plate and the channel plate.
4. The cell column of claim 2, wherein:
   the termination manifold comprises a relief cut configured to at least partially divide the termination manifold into first and second pieces; and
   the electrical contact is configured to electrically connect the first and second pieces.
5. The cell column of claim 2, wherein the termination manifold further comprises:
   a fuel inlet hole fluidly connected to the inlet conduit; and
   an anode exhaust outlet hole fluidly connected to the outlet conduit.
6. The cell column of claim 5, wherein the top plate seals upper ends of the fuel inlet hole and the anode exhaust outlet hole.
7. The cell column of claim 5, further comprising conduit caps which seal upper ends of the fuel inlet hole and the anode exhaust outlet hole.
8. The cell column of claim 5, wherein:
   the termination manifold further comprises an anode exhaust channel that fluidly connects that anode exhaust inlet hole and the anode exhaust outlet hole; and
   the fuel channel fluidly connects the fuel inlet hole and the fuel outlet hole.
9. The cell column of claim 8, wherein the fuel channel and the anode exhaust channel are formed in the single channel plate and extend between the upper plate and the lower plate.
10. The cell column of claim 8, wherein the fuel manifolds each comprise:
   a fuel outlet hole and a fuel inlet hole that extend through the fuel manifold;
   an anode exhaust inlet hole and an anode exhaust outlet hole that extend through the fuel manifold;
   a fuel channel that fluidly connects the fuel outlet hole and the fuel inlet hole; and
   an anode exhaust channel that fluidly connects the anode exhaust outlet hole and the anode exhaust inlet hole.
11. The cell column of claim 10, wherein a width of the fuel channels of at least some of the fuel manifolds is greater than a width of the fuel channel of the termination manifold.
12. The cell column of claim 11, wherein the width of the fuel channels of upper two of the fuel manifolds is greater than the width of the fuel channel of the termination manifold, and greater than the width of the fuel channels of lower two of the fuel manifolds.
13. The cell column of claim 10, wherein:
   the termination manifold includes only three plates consisting of the lower plate, the channel plate and the upper plate which is disposed directly on the channel plate; and
   each of the fuel manifolds include four plates comprising two channel plates located between respective lower and upper plates.
14. The cell column of claim 1, wherein:
   the column comprises nine of the stacks and four of the fuel manifolds;
   each fuel manifold is located between a pair of the stacks and configured to provide fuel to and receive anode exhaust from the pair of the stacks; and
   no cell stacks are located above the termination manifold.
15. The cell column of claim 1, further comprising a bottom termination plate disposed below lowermost one of the stacks, wherein the cell column does not include a top termination plate.
16. The cell column of claim 1, further comprising:
   a compression assembly disposed directly on the termination manifold;
   a bottom termination plate disposed below the stacks; and
   a ceramic frame surrounding the stacks, the compression assembly, and the bottom termination plate.
17. The cell column of claim 16, wherein the ceramic frame comprises:
   a top plate disposed on the compression assembly;
   a bottom plate disposed under the bottom termination plate;
   side baffles disposed on opposing sides of the stacks;
   bottom connectors connecting the bottom plate to the side baffles; and
   top connectors connecting the top plate to the side baffles.
18. The cell column of claim 17, wherein:
   the top connectors are disposed between the top plate and the side baffles, such that the top plate does not directly contact the side baffles; and
   the bottom connectors are disposed between the bottom plate and the side baffles, such that the bottom plate directly contacts the side baffles.
19. The cell column of claim 1, wherein:
   the electrochemical cells comprise fuel cells; and
   the cell column comprises a fuel cell column.
20. An electrochemical cell system, comprising:
   the cell column of claim 1 located on a base;
   an additional cell column located on the base, wherein the additional cell column comprises an additional termination manifold; and
   a jumper or wire electrically connecting the termination manifold of the cell column to the additional termination manifold of the additional cell column.

## Claims

1. A cell column, comprising:
vertically aligned stacks comprising electrochemical cells separated by interconnects;
fuel manifolds disposed between the stacks;
a termination manifold disposed above an uppermost one of the stacks, wherein the termination manifold comprises an electrical terminal of the cell column, and a fuel channel configured provide fuel to the uppermost one of the stacks; and
an inlet conduit and an outlet conduit fluidly connected to the fuel manifolds and the termination manifold.

2. The cell column of claim 1, wherein the wherein the termination manifold comprises:
a lower plate;
a channel plate disposed on the bottom plate;
a fuel outlet hole that extends through the bottom plate and the channel plate and is configured to provide the fuel to the uppermost one of the stacks;
an anode exhaust inlet hole that extends through the bottom plate and the channel plate and is configured to receive the anode exhaust from the uppermost one of the stacks; and
an upper plate disposed over the channel plate and seals upper ends of the fuel inlet hole and the anode exhaust inlet hole.

3. The cell column of claim 2, wherein the upper plate comprises an electrical contact that extends horizontally beyond perimeters of the lower plate and the channel plate.

4. The cell column of claim 2, wherein:
the termination manifold comprises a relief cut configured to at least partially divide the termination manifold into first and second pieces; and
the electrical contact is configured to electrically connect the first and second pieces.

5. The cell column of claim 2, wherein the termination manifold further comprises:
a fuel inlet hole fluidly connected to the inlet conduit; and
an anode exhaust outlet hole fluidly connected to the outlet conduit.

6. The cell column of claim 5, wherein the top plate seals upper ends of the fuel inlet hole and the anode exhaust outlet hole, and further comprising conduit caps which seal upper ends of the fuel inlet hole and the anode exhaust outlet hole.

7. The cell column of claim 5, wherein:
the termination manifold further comprises an anode exhaust channel that fluidly connects that anode exhaust inlet hole and the anode exhaust outlet hole; and
the fuel channel fluidly connects the fuel inlet hole and the fuel outlet hole.

8. The cell column of claim 7, wherein the fuel channel and the anode exhaust channel are formed in the single channel plate and extend between the upper plate and the lower plate.

9. The cell column of claim 7, wherein the fuel manifolds each comprise:
a fuel outlet hole and a fuel inlet hole that extend through the fuel manifold;
an anode exhaust inlet hole and an anode exhaust outlet hole that extend through the fuel manifold;
a fuel channel that fluidly connects the fuel outlet hole and the fuel inlet hole; and
an anode exhaust channel that fluidly connects the anode exhaust outlet hole and the anode exhaust inlet hole, wherein the width of the fuel channels of upper two of the fuel manifolds is greater than the width of the fuel channel of the termination manifold, and greater than the width of the fuel channels of lower two of the fuel manifolds.

10. The cell column of claim 9, wherein:
the termination manifold includes only three plates consisting of the lower plate, the channel plate and the upper plate which is disposed directly on the channel plate; and
each of the fuel manifolds include four plates comprising two channel plates located between respective lower and upper plates.

11. The cell column of claim 1, wherein:
the column comprises nine of the stacks and four of the fuel manifolds;
each fuel manifold is located between a pair of the stacks and configured to provide fuel to and receive anode exhaust from the pair of the stacks; and
no cell stacks are located above the termination manifold.

12. The cell column of claim 1, further comprising a bottom termination plate disposed below lowermost one of the stacks, wherein the cell column does not include a top termination plate.

13. The cell column of claim 1, further comprising:
a compression assembly disposed directly on the termination manifold;
a bottom termination plate disposed below the stacks; and
a ceramic frame surrounding the stacks, the compression assembly, and the bottom termination plate,
wherein the ceramic frame comprises:
a top plate disposed on the compression assembly;
a bottom plate disposed under the bottom termination plate;
side baffles disposed on opposing sides of the stacks;
bottom connectors connecting the bottom plate to the side baffles; and
top connectors connecting the top plate to the side baffles, and wherein:
the top connectors are disposed between the top plate and the side baffles, such that the top plate does not directly contact the side baffles; and
the bottom connectors are disposed between the bottom plate and the side baffles, such that the bottom plate directly contacts the side baffles.

14. The cell column of claim 1, wherein:
the electrochemical cells comprise fuel cells; and
the cell column comprises a fuel cell column.

15. An electrochemical cell system, comprising:
the cell column of claim 1 located on a base;
an additional cell column located on the base, wherein the additional cell column comprises an additional termination manifold; and
a jumper or wire electrically connecting the termination manifold of the cell column to the additional termination manifold of the additional cell column.
